# FASCICULE DE BREVET EUROPEEN

(11) **EP 4 765 718 B1**
(45) Date de publication et mention de la délivrance du brevet: **28.10.2026**
(21) Numéro de dépôt: 25220536.4
(22) Date de dépôt: 03.12.2025
(51) Int. Cl.: H04L 9/00

(54) **MASQUAGE POUR L EXECUTION DE CODE COMPORTANT DES OPERATIONS BOOLEENNES ET DES OPERATIONS ARITHMETIQUES**
MASKIERUNG ZUR AUSFÜHRUNG VON CODES MIT BOOLESCHEN OPERATIONEN UND ARITHMETISCHEN OPERATIONEN
MASKING FOR EXECUTING CODE INCLUDING BOOLEAN OPERATIONS AND ARITHMETIC OPERATIONS

(30) Priorité: 17.12.2024 FR 2414366
(43) Date de publication de la demande: 24.06.2026
(73) Titulaire: Commissariat à l'Energie Atomique et aux Energies Alternatives, 75015 Paris (FR)
(72) Inventeur: BELLEVILLE, Nicolas, 38054 GRENOBLE Cedex 09 (FR); FLANDIN, Léo, 38054 GRENOBLE Cedex 09 (FR)
(74) Mandataire: Atout PI Laplace

(56) Documents cités:
- CORON JEAN-SÉBASTIEN ET AL: "Conversion from Arithmetic to Boolean Masking with Logarithmic Complexity", 12 August 2015, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 130 - 149, ISBN: 978-3-319-10403-4, XP047504154
- LI YANBIN ET AL: "Analysis of Multiplicative Low Entropy Masking Schemes Against Correlation Power Attack", IEEE TRANSACTIONS ON INFORMATION FORENSICS AND SECURITY, IEEE, USA, vol. 16, 9 July 2021 (2021-07-09), pages 4466 - 4481, XP011877831, ISSN: 1556-6013, [retrieved on 20210910], DOI: 10.1109/TIFS.2021.3096130
- MING JINGDIAN ET AL: "Mind the Balance: Revealing the Vulnerabilities in Low Entropy Masking Schemes", IEEE TRANSACTIONS ON INFORMATION FORENSICS AND SECURITY, IEEE, USA, vol. 15, 13 May 2020 (2020-05-13), pages 3694 - 3708, XP011797980, ISSN: 1556-6013, [retrieved on 20200710], DOI: 10.1109/TIFS.2020.2994775

## Description

### Contexte technique

L'invention s'inscrit dans le domaine de la cryptographie, et a un intérêt particulier dans le cadre de la protection contre les attaques par canal auxiliaire.

Les attaques par canal auxiliaire exploitent la mesure d'une grandeur physique comme la consommation électrique ou les émissions électromagnétiques d'un processeur afin de déduire tout ou partie des instructions ou données manipulées par celui-ci. Ce type d'attaque est en particulier efficace pour découvrir des clés de chiffrement utilisées par une entité.

Une contre-mesure largement étudiée et utilisée contre ce type d'attaque est le masquage. Un masque est appliqué à toute donnée devant être conservée secrète, cette donnée étant appelée le secret, et pouvant typiquement être une clé. Le secret prend par exemple la forme d'un long mot en binaire - un nombre entier écrit en base 2.

La technique du masquage consiste à séparer ou décomposer un secret, comme une clé, en plusieurs parties appelées couramment par le terme anglais shares (parts ou portion). La définition des shares à partir du secret est menée de telle sorte que la connaissance simultanée de tous les shares est nécessaire pour reconstruire le secret. Les différents shares sont stockés dans des variables séparées du programme et du matériel informatique. Les calculs dépendant du secret sont de plus effectués en manipulant les shares, sans les recombiner afin de ne pas révéler le secret, même à un attaquant observant le processeur au cours du calcul par une attaque par canal auxiliaire.

On s'intéresse notamment au masquage d'ordre 1, par lequel chaque donnée secrète est décomposée en deux shares.

On connait le masquage dit booléen et le masquage dit arithmétique.

Le masquage booléen utilise un nombre entier appelé masque et l'opérateur logique ou exclusif XOR pour effectuer la décomposition du secret en shares. Si le secret est noté s, et si on choisit un masque r, typiquement par génération aléatoire, et si le symbole ⊕ désigne l'opérateur ou exclusif XOR bit à bit, le secret est décomposé en deux shares s0 et s1. Ces deux shares sont définis par s0 = s⊕r et s1 = r. Elles encodent efficacement le secret s puisque la connaissance de s0 seul ne permet pas de déduire s, et que la connaissance de s1 seule ne permet pas non plus de déduire s. Celui-ci peut néanmoins être reconstitué par l'opération s0⊕s1=s, ce qui est possible à l'entité légitime, mais pas à l'attaquant, sauf pour celui-ci à monter une attaque d'ordre supérieur à la complexité plus importante.

Le masquage arithmétique utilise quant à lui une addition modulaire pour la décomposition d'un secret en shares. Cette technique utilise aussi un nombre aléatoire r qui constitue le masque. Elle utilise la relation de congruence dans le domaine des nombres entiers. On s'intéresse ici à une relation de congruence modulo une puissance entière positive de 2, notée n et choisie de manière fixe, cette congruence étant donc notée [2ⁿ]. Les deux shares générés sont définies comme s0 = s + r [2ⁿ] et s1 = r. Il en résulte la congruence suivante pour reconstituer le secret quand on connait les deux shares : s0 - s1 = s [2ⁿ].

Le masquage booléen est préféré pour sécuriser les applications de cryptographie comportant principalement des opérations booléennes, tandis que le masquage arithmétique est utilisé pour les applications de cryptographie comportant des opérations arithmétiques.

Lorsqu'un code comporte un mélange d'opérations booléennes et arithmétiques, les deux types de masquage doivent être utilisés l'un après l'autre, en effectuant une conversion lors du changement de type de masquage, qui doit respecter la même condition de sécurité que chacun des masquages : le secret ne doit pouvoir être déduit d'aucune variable intermédiaire utilisée lors de cette conversion. Cette contrainte impacte la performance des procédés de conversion.

On connait de plus le masquage à faible entropie (low entropy masking en anglais), dont le principe est de restreindre le choix des nombres aléatoires utilisés pour la décomposition du secret en shares dans le but de gagner en performance. Cette technique est connue de l'article Nassar, M., Guilley, S., Danger, JL. (2011). Formal Analysis of the Entropy / Security Trade-off in First-Order Masking Countermeasures against Side-Channel Attacks. In: Bernstein, D.J., Chatterjee, S. (eds) Progress in Cryptology - INDOCRYPT 2011. INDOCRYPT 2011. Lecture Notes in Computer Science, vol 7107. Springer, Berlin, Heidelberg.

On connait d'autre part des schémas de conversion de masquage booléen à masquage arithmétique ou de masquage arithmétique à masquage booléen, ainsi que des approches associées qui permettent effectuer une addition arithmétique sur une information masquée de manière booléenne sans passer par une double conversion, du masquage booléen vers le masquage arithmétique et vice versa.

Par exemple le document Efficient Side-Channel Protections of ARX Ciphers. (2018). IACR Transactions on Cryptographic Hardware and Embedded Systems, 2018(3), 627-653. présente une méthode pour effectuer une addition arithmétique sur des variables masquées en masquage booléen, en décomposant l'addition en une série d'opérations booléennes. C'est un exemple d'algorithme de type itératif permettant ainsi de faire une opération arithmétique sur des variables masquées en masquage booléen. Le nombre d'instructions nécessaires est élevé, et la méthode est donc coûteuse en temps de calcul, ce qui est un inconvénient.

On connait aussi de Van Beirendonck, Michiel, Jan-Pieter D'Anvers, and Ingrid Verbauwhede. "Analysis and comparison of table-based arithmetic to boolean masking." IACR Transactions on Cryptographic Hardware and Embedded Systems (2021): 275-297 des méthodes visant à accélérer la conversion de masquage arithmétique à booléen via l'utilisation de tables, dans lesquelles sont tabulés les résultats de certains calculs. L'algorithme utilisant ces tables est plus rapide qu'un algorithme itératif classique. Il est néanmoins couteux en ressources et peu performant en temps d'exécution du fait du précalcul des tables et de la conversion en elle-même.

On connait de plus le document US11822704B2 un procédé de conversion de masquage booléen en masquage arithmétique,

Et on connait du document US7334133B23 une méthode d'implémentation d'un algorithme cryptographique utilisant des opérations booléennes et des opérations arithmétiques.

On peut de plus raisonnablement estimer que lors d'une attaque par canal auxiliaire, les différents bits d'une variable intermédiaire fuitent indépendamment les uns des autres : la fuite observée par un attaquant peut s'écrire sous la forme f₀(b₀) + f₁(b₁) + ··· où les bᵢ sont les bits d'une variable, et où les fᵢ sont des fonctions quelconques. Cela correspond assez bien à ce qui est observé par exemple pour les fuites par consommation ou par émissions électromagnétiques des circuits.

### Caractéristiques de l'invention et avantages

On souhaite donc permettre l'exécution masquée de codes comportant des opérations booléennes et arithmétiques tout en limitant le surcoût en temps d'exécution, et en conservant un bon niveau de sécurité vis-à-vis des attaques par canal auxiliaire.

Pour cela il est proposé une méthode de traitement par un processeur d'un secret protégé, comprenant une étape de choix et de mise en place sur le secret protégé par un masque initial d'un masquage à faible entropie, puis la mise en œuvre sur le secret maintenu sous la protection dudit masquage à faible entropie d'une opération incluant un retrait du masque initial.

De manière remarquable, un encodage étant sur n bits, le masquage à faible entropie utilise un masque choisi dans l'ensemble {0 ; 2*ⁿ* - 1}, et appliqué par un opérateur ou exclusif bit à bit.

La mise en œuvre de l'opération peut ainsi être adaptée par exemple à l'aide d'un code tel que présenté dans les modes de réalisation détaillés à titre illustratifs plus loin, au masque à faible entropie choisi en profitant d'un encodage des entiers sur n bits, n étant un entier positif. Dans ce contexte, le nombre 2*ⁿ* - 1 comporte tous ses bits à 1. L'invention s'appuie sur la congruence modulo 2*ⁿ* suivante qui découle de cette observation : $xXOR \left({2}^{n}-1\right) = - x - 1 .$

Il est alors possible d'avoir une fuite moyenne indépendante des valeurs de secret, tout en parvenant à des réalisations très rapides et peu coûteuses en ressources.

Selon des caractéristiques optionnelles et avantageuses :
- l'opération peut comprendre une opération arithmétique combinant le secret et une autre donnée.
- l'opération peut comprendre une opération logique combinant le secret et une autre donnée.
- l'opération peut comprendre l'application d'un masque de destination distinct du masque initialement porté par le secret.
- l'opération peut comprendre la mise en place sur le secret d'un masque arithmétique alors que le masque porté initialement était un masque booléen.
- l'opération peut comprendre la mise en place sur le secret d'un masque booléen alors que le masque porté initialement était un masque arithmétique.
- le masque arithmétique peut être un masque arithmétique modulo une puissance de 2.
- la méthode de traitement peut comprendre le choix aléatoire d'un entier entre 0 et une borne maximale au moins égale à la puissance de 2 codée sur autant de bits que l'entier modulo lequel le masque arithmétique est effectué, puis une réduction modulaire modulo ledit entier adaptée pour obtenir des shares codant pour le secret en masquage arithmétique souhaité. Cela permet de traiter le cas d'un masquage arithmétique qui est un masquage arithmétique modulo un entier qui n'est pas une puissance de 2.
- la méthode de traitement peut comprendre au moins une opération d'arithmétique modulaire, en particulier dans un mode de réalisation, une addition, modulo l'entier modulo lequel le masque arithmétique est effectué, effectuée sous la protection d'un deuxième masque choisi dans l'ensemble {0 ; 2*ⁿ* - 1} et appliqué lui aussi par un opérateur ou exclusif bit à bit. A nouveau, cela permet de traiter le cas d'un masque arithmétique qui est un masque arithmétique modulo un entier qui n'est pas une puissance de 2, notamment pour obtenir des shares en masquage booléen.
- l'opération peut comprendre l'application du même masque à faible entropie à une deuxième donnée secrète à laquelle le secret est ensuite combiné au cours de l'opération.
- l'opération peut comporter une opération arithmétique corrective dépendant du masque à faible entropie choisi et menée lors du retrait du masque initial ou lors de l'application d'un masque arithmétique ou lors d'une opération arithmétique combinant le secret à une deuxième donnée secrète.
- l'opération peut comprendre dans certaines variantes particulières la mise en place d'un masque de destination et la méthode de traitement peut comprendre aussi une étape de choix aléatoire du masque de destination parmi un ensemble de masques possibles relevant d'une entropie plus forte que celle dudit masquage à faible entropie, l'opération étant suivie d'un retrait du masque à faible entropie.
- le secret protégé peut être protégé initialement par un masquage d'ordre 1.
- le secret protégé peut être protégé par un masquage initial d'ordre au moins 2, la méthode de traitement faisant appel à une procédure pour passer d'un masquage booléen à un masquage arithmétique ou pour passer d'un masquage arithmétique à un masquage booléen pour un masquage d'ordre inférieur d'une unité à l'ordre du masquage initial. Un gain de temps considérable est obtenu, du fait de la complexité des fonctions de conversion qui est généralement quadratique en fonction de l'ordre.

L'invention repose ainsi dans un mode de réalisation sur l'utilisation d'un masquage booléen dont le choix des masques est restreint aux deux nombres 0 et 2ⁿ - 1. Il s'agit d'un masquage à faible entropie puisque le nombre de masques possibles est réduit. Ce masquage booléen particulier sert alors par exemple de pont entre un masquage booléen qui peut être un masquage booléen classique et un masquage arithmétique.

L'invention consiste ainsi selon un mode de réalisation en une procédure permettant de passer d'un masquage arithmétique à un masquage booléen. D'autres modes de réalisation sont néanmoins présentés.

Ainsi l'invention propose aussi entre autres variantes, une variante dans laquelle on effectue une addition arithmétique entre deux données masquées de manière booléenne, sans avoir basculé vers le masquage arithmétique.

### Liste des figures

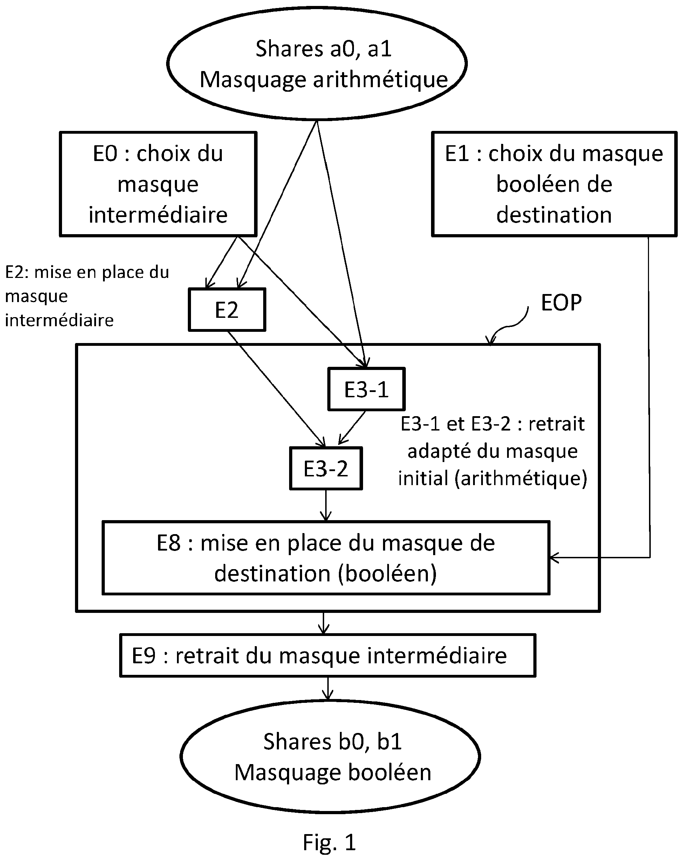

Les figures 1 à 5 présentent chacune un mode de réalisation de l'invention.

### Description en relation avec les figures

Toutes les additions et soustractions dans le texte s'entendent modulo 2", où n est un entier quelconque choisi en fonction de l'architecture et de l'application à masquer.

Le symbole ⊕ désigne, comme déjà mentionné, l'opérateur logique ou exclusif (XOR). Le symbole & désigne quant à lui l'opérateur ET booléen.

Un masquage booléen où les masques sont choisis aléatoirement dans l'ensemble à deux éléments {0, 2ⁿ-1} rend indépendant du secret masqué la moyenne d'une fuite obtenue par attaque par canal auxiliaire.

La fuite moyenne m se calcule en additionnant la moitié de la fuite dans le cas où le masque vaut 0, et la moitié dans le cas où le masque vaut 2ⁿ-1 $m = \left(\left({f}_{0}\left({b}_{0}\right)+{f}_{1}\left({b}_{1}\right)+⋯+{f}_{n}-1\left({b}_{n}-1\right)\right)+\left({f}_{0}\left({b}_{0}⊕1\right)+{f}_{1}\left({b}_{1}⊕1\right)+⋯+{f}_{n}-1\left(\begin{matrix}{b}_{n - 1} \\ ⊕ 1\end{matrix}\right)\right)\right) / 2$ Ou encore $m = = \left({f}_{0}\left({b}_{0}\right)+{f}_{0}\left({b}_{0}⊕1\right)+{f}_{1}\left({b}_{1}\right)+{f}_{1}\left({b}_{1}⊕1\right)+⋯+{f}_{n - 1}\left({b}_{n}-1\right)+{f}_{n}-1\left(\begin{matrix}{b}_{n - 1} \\ ⊕ 1\end{matrix}\right)\right) / 2$

Or pour n'importe quel bit b, b=0 implique b⊕1=1, et b=1 implique b⊕1=0, donc f(b)+f(b⊕1) = f(0)+f(1) quelle que soit la valeur de b.

D'où, quel que soit le choix de b₀b₁...bₙ₋₁ , on obtient : $m = \left({f}_{0}\left(0\right)+{f}_{0}\left(1\right)+{f}_{1}\left(0\right)+{f}_{1}\left(1\right)+⋯+{f}_{n - 1}\left(0\right)+{f}_{n - 1}\left(1\right)\right) / 2$

On en déduit que la fuite moyenne est constante, c'est à dire indépendante de la valeur b0b1...bn-1.

[Fig. 1] En figure 1, on a représenté un premier mode de réalisation.

a0 et a1 sont deux shares encodant un secret s en masquage arithmétique. On a donc a0 - a1 = s [2ⁿ].

Pour passer du masquage arithmétique à un masquage booléen de destination on procède alors selon les étapes suivantes :

Au cours d'une étape E0, on choisit parmi les deux chaînes de n bits 0 et 2ⁿ - 1. Il est avantageux que ce choix soit totalement aléatoire.

La chaîne ainsi choisie selon un choix à faible entropie va servir de masque booléen intermédiaire, et est inscrite d'une part in extenso dans une variable à n bits rwide, les n bits valant alors tous 0 ou tous 1, $rwide = rand \left\{0, {2}^{n}-1\right\}$ et également de manière condensée dans une variable à un seul bit rbit, qui vaut 0 dans le premier cas, et 1 dans le deuxième cas (la génération de cette valeur booléenne est effectuée par l'utilisation d'un opérateur ET symbolisé &). $rbit = rwide & 1$

La notation wide faite référence à l'écriture in extenso sur n bits.

D'autres méthodes de génération de rwide et rbit sont possibles.

Parallèlement dans une étape E1, on génère le masque booléen de destination, parmi un grand nombre de masques possibles, en l'occurrence 2ⁿ valeurs possibles. $b 0 = rand \left[0, {2}^{n}\right[$

Ce secret est une chaine de n bits, toutes les chaînes étant avantageusement équiprobables dans la génération de ce secret, et le résultat du tirage aléatoire étant stocké dans une variable b0, qui a vocation à être utilisée telle quelle comme l'un des deux shares du masquage booléen final.

Il est précisé ici que comme la génération du secret b0, opérée lors de l'étape E1, celle-ci peut dans une variante être réalisée avant l'étape E0.

Dans une étape E2, on procède à une mise en place du masque booléen intermédiaire (à faible entropie) sur le share a0. Cela implique, s'agissant d'un masque intermédiaire qui est particulier, mais néanmoins de type booléen, de mettre en œuvre l'opérateur XOR. Le résultat est stocké dans une variable d. $d = a 0 ⊕ rwide$

Puis on effectue une opération EOP sur le secret masqué s, comprenant le retrait du masquage arithmétique et la mise en place du masque de destination. L'opération EOP est adaptée en tenant compte de rwide.

On met en place le masque intermédiaire sur le share a1, au cours d'une étape E3-1. Le résultat est placé dans une variable e. $e = a 1 ⊕ rwide$

Les deux opérations, E2 pour le share a0 et E3-1 pour le share a1, sont indépendantes l'une de l'autre - et donc peuvent être mises en œuvre dans un ordre donné ou l'ordre inverse.

Puis, une fois ces valeurs masquées obtenues, dans une étape E3-2, on les utilise pour procéder au retrait du masque arithmétique sur le share a0, à l'aide du share a1, dont c'est la fonction, par construction. Cela implique, s'agissant d'un masque arithmétique, la réalisation d'une différence modulo 2ⁿ. L'opération est réalisée sur les variables d et e héritières de a0 et a1. Mais au vu de la présence du masque booléen intermédiaire sur ces deux shares, on corrige le résultat de la soustraction par la déduction de son résultat de la valeur de rbit. Le résultat est inscrit dans une variable intermédiaire f. $f = d - e - rbit$

La procédure peut alors être interrompue, le secret restant protégé par le masquage à faible entropie et faisant l'objet de diverses opérations.

La procédure peut à l'inverse être poursuivie, ou reprise après diverses opérations, de la manière suivante.

Dans une étape E8, on ajoute le masque booléen de destination sur le contenu de la variable intermédiaire f en pratiquant l'opération XOR entre le contenu de f et le secret b0. On stocke la chaine obtenue dans une variable intermédiaire g. $g = f ⊕ b 0$

Il est précisé ici que comme le secret b0, généré lors de l'étape E1, n'est pas utilisé avant la mise en œuvre de l'étape E8, l'étape E1 peut dans différentes variantes être réalisée après l'étape E2 et même juste avant l'étape E8.

On reprend le cours de la figure 1 : l'opération EOP est terminée (elle a été adaptée en tenant compte de la valeur de rwide au stade de l'étape E3-1 et de l'étape E3-2) et seulement après la réalisation de l'étape E8, on enlève dans une étape E9 le masque booléen intermédiaire au résultat stocké dans la variable g, en pratiquant l'opération XOR entre le contenu de g et le share rwide et on inscrit le résultat dans une variable b1, qui est le deuxième share du masque booléen final. $b 1 = g ⊕ rwide$

Les chaînes b0 et b1 encodent alors correctement le secret s, en masquage booléen.

La variable rbit permet de faire en sorte que le résultat final ne dépende pas du choix de rwide, en compensant l'apparition de certaines constantes lorsque rwide vaut 2ⁿ - 1, sans que la suite d'opérations effectuées ne dépende du choix de rwide.

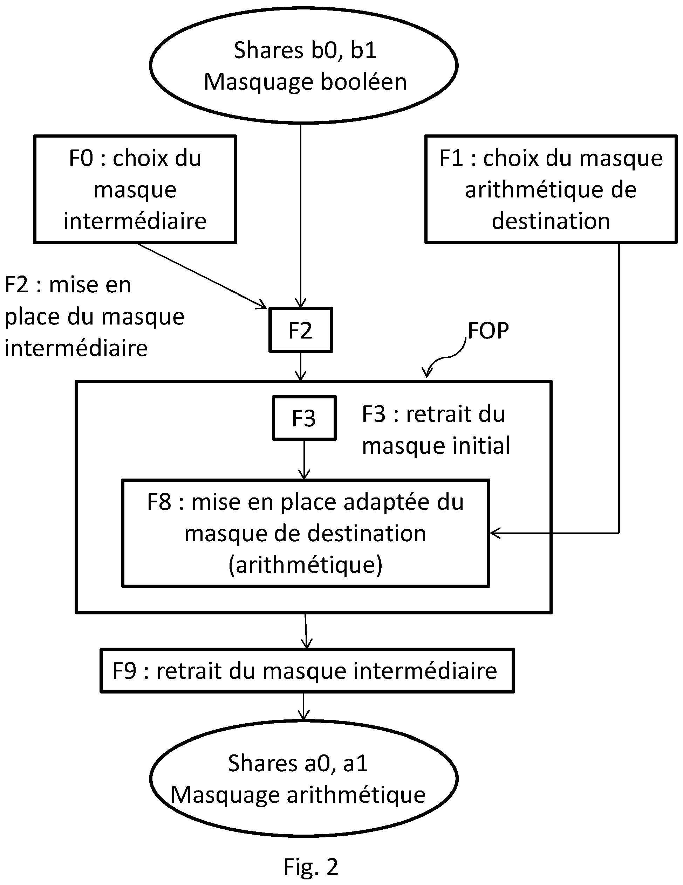

[Fig. 2] En figure 2, on a représenté un deuxième mode de réalisation. Il porte sur le passage d'un masquage booléen à un masquage arithmétique.

b0 et b1 sont deux shares encodant un secret s en masquage booléen : b0 ⊕ b1 = s. La procédure est la suivante :

Au cours d'une étape F0, similaire à l'étape E0 du mode de réalisation de la figure 1, on choisit parmi les deux chaînes de n bits 0 et 2ⁿ - 1. La chaîne ainsi choisie selon un choix à faible entropie est prévue pour servir de masque booléen intermédiaire, et est inscrite in extenso dans une variable à n bits rwide, les n bits valant alors tous 0 ou tous 1. $rwide = rand \left\{0, {2}^{n}-1\right\}$

Le masque à faible entropie est également inscrit de manière condensée dans une variable à un seul bit rbit, qui vaut 0 dans le premier cas, et 1 dans le deuxième cas. $rbit = rwide & 1$

Puis au cours d'une étape F1, on génère le masque arithmétique de destination, parmi un grand nombre de masques possibles. Ce secret est une chaine de n bits, toutes les chaînes possibles - elles sont au nombre de 2ⁿ, étant avantageusement équiprobables dans la génération de ce secret, et le résultat du tirage aléatoire étant stocké dans une variable rarith, qui a vocation à être utilisée telle quelle comme l'un des deux shares du masquage arithmétique final. $rarith = rand \left[0, {2}^{n}\right[$

Cette génération au cours de l'étape F1 est similaire à la génération au cours de l'étape E1 du mode de réalisation de la figure 1, mais la chaine produite a vocation à servir de masque arithmétique et non pas booléen.

Il est précisé ici que comme la génération du secret rarith, opérée lors de l'étape F1, ne nécessitant pas la connaissance du masque booléen intermédiaire, l'étape F1 peut dans une variante être réalisée avant l'étape F0.

Au cours d'une étape F2, on procède à la mise en place du masque intermédiaire sur le share b0. Le résultat est stocké dans une variable c. Il est obtenu en pratiquant l'opérateur XOR entre la chaine b0 et le secret rwide. $c = b 0 ⊕ rwide$

Puis on effectue une opération FOP sur le secret, comprenant le retrait du masquage initial et la mise en place du masque de destination. L'opération FOP est adaptée en tenant compte de rwide.

Au cours d'une étape F3, on procède au retrait du masque booléen initial sur le résultat c, héritier de b0, à l'aide du share b1. Le résultat est stocké dans une variable intermédiaire d. Il est obtenu en pratiquant l'opérateur XOR entre la chaine c et le share b1. $d = c ⊕ b 1$

Dans une étape F8, on adapte le masque arithmétique généré à l'étape F1 au fait qu'on souhaite l'appliquer sur une chaîne ayant fait l'objet d'un masquage booléen particulier, et on stocke le masque arithmétique adapté dans une variable e. Pour cela, on applique l'opérateur XOR au secret rarith et au secret rwide, en ajoutant la valeur 0 ou 1 contenue dans rbit. $e = \left(rarith⊕rwide\right) + rbit$

Puis on applique le masque arithmétique ainsi adapté sur la variable intermédiaire d et le résultat est stocké dans une variable intermédiaire f. Il est obtenu par l'addition modulaire du contenu des variables d et e. $f = d + e$

Il est précisé ici que comme le secret rarith, généré lors de l'étape F1, n'est pas utilisé avant la mise en œuvre de l'étape F8, l'étape F1 peut dans différentes variantes être réalisée après l'étape F2 et même juste avant l'étape F8.

L'opération FOP est terminée (elle a été adaptée en tenant compte de la valeur de rwide au stade de l'étape F8). On reprend le cours de la figure 2 : seulement après la réalisation de l'étape F8, au cours d'une étape F9, on enlève le masque booléen à faible entropie au contenu de la variable f. On conserve le résultat dans la variable a0. Pour cela, on applique l'opérateur XOR au contenu de la variable f et au masque rwide. $a 0 = f ⊕ rwide$

Les shares a0 et rarith que l'on rebaptise a1 encodent alors le secret, en masquage arithmétique.

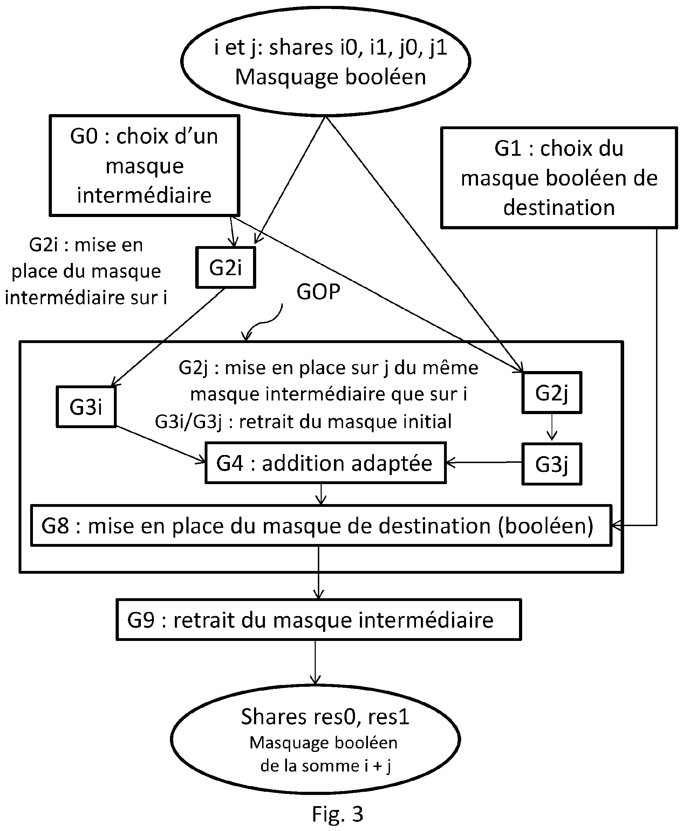

[Fig. 3] En figure 3, on a représenté un troisième mode de réalisation.

Deux secrets i et j sont masqués par masquage booléen. Les encodages respectifs de i et j en masquage booléen d'ordre 1 sont notés {i0,i1} et {j0,j1}. Ainsi, i0 et i1 sont les shares de i et j0 et j1 sont les shares de j.

Une addition arithmétique est effectuée entre les secrets i et j sans convertir leur masquage en masquage arithmétique, et cela via la procédure suivante :
Au cours d'une étape G0, similaire à l'étape E0 du mode de réalisation de la figure 1, et aussi à l'étape F0 du mode de réalisation de la figure 2, on choisit parmi les deux chaînes de n bits 0 et 2ⁿ - 1. La chaîne ainsi choisie selon un choix à faible entropie est prévue pour servir de masque booléen intermédiaire, et est inscrite d'une part in extenso dans une variable à n bits rwide, les n bits valant alors tous 0 ou tous 1, $rwide = rand \left\{0, {2}^{n}-1\right\}$
et également de manière condensée dans une variable à un seul bit rbit, qui vaut 0 dans le premier cas, et 1 dans le deuxième cas. $rbit = rwide & 1$

Parallèlement, au cours d'une étape G1, un masque booléen de n bits est choisi parmi 2ⁿ valeurs possibles (c'est un masque à forte entropie). Il est inscrit dans la variable de n bits rbool. Le processus est similaire à celui de l'étape E1 du mode de réalisation de la figure 1. $rbool = rand \left[0, {2}^{n}\right[$

Au cours d'une étape G2i, on applique le masque booléen intermédiaire au share i0. Le résultat est stocké dans la variable intermédiaire a. $a = i 0 ⊕ rwide$

Puis on effectue une opération GOP sur le secret i, comprenant le retrait du masquage arithmétique, une addition arithmétique avec j et la mise en place du masque de destination. L'opération GOP est adaptée en tenant compte de rwide.

Ainsi au cours d'une étape G3i, on enlève à la variable intermédiaire a le masque booléen initial qui avait été utilisé pour i. Pour cette suppression du masque booléen initial, c'est le share i1 et l'opérateur XOR qui sont utilisés - le résultat est stocké dans une variable intermédiaire b. $b = a ⊕ i 1$

Parallèlement, le même traitement est appliqué au share j0, au cours d'étapes G2j et G3j. Les variables intermédiaires sont appelées c et d. Et de manière notable, le masque intermédiaire utilisé est le même que celui qui a été utilisé pour i, à savoir rwide. $c = j 0 ⊕ rwide$ Et une fois ce masque appliqué, on retire le masque booléen initial, par l'application de j1. $d = c ⊕ j 1$

Puis, au cours d'une étape G4, on additionne les valeurs obtenues b et d, en corrigeant la somme à l'aide de la valeur condensée rbit du masque intermédiaire. Il s'agit là de combiner aux fins d'une addition i et j, mais sous le masque rwide. De plus, l'addition est corrigée pour tenir compte de la présence du masque. Cela implique de compléter l'addition modulaire de b et d par l'ajout à la somme de la valeur de rbit. Le résultat est inscrit dans une variable e. $e = b + d + rbit$

De manière remarquable, cette addition, c'est-à-dire une opération arithmétique, est menée alors même que les secrets sont masqués, mais sans qu'un masquage arithmétique ne soit utilisé : le masquage est en effet booléen.

La procédure peut alors être interrompue, le secret (le résultat de l'addition) restant protégé par le masquage à faible entropie et faisant l'objet de diverses opérations.

La procédure peut à l'inverse être poursuivie, ou reprise après diverses opérations, de la manière suivante.

Au cours d'une étape G8, le masque booléen final est appliqué au contenu de la variable intermédiaire e. $f = e ⊕ rbool$

Le résultat est inscrit dans une variable intermédiaire f.

L'opération GOP est alors terminée (elle a été adaptée en tenant compte de la valeur de rwide au stade de l'étape G2-j et de l'étape G4)

Au cours d'une étape G9, le masque booléen à faible entropie, maintenant inutile, est retiré du contenu de la variable f pour terminer le processus, et libérer le share res0 qui est un share du résultat de l'addition de i et j. $res 0 = f ⊕ rwide$

C'est le secret rbool, rebaptisé res1, qui est le deuxième share du résultat de l'addition de i et j. $res 1 = rbool$

Les shares res0 et res1 encodent alors correctement la somme i+j, en masquage booléen, à savoir le même type de masquage qu'utilisé initialement avant qu'une opération arithmétique ne soit demandée.

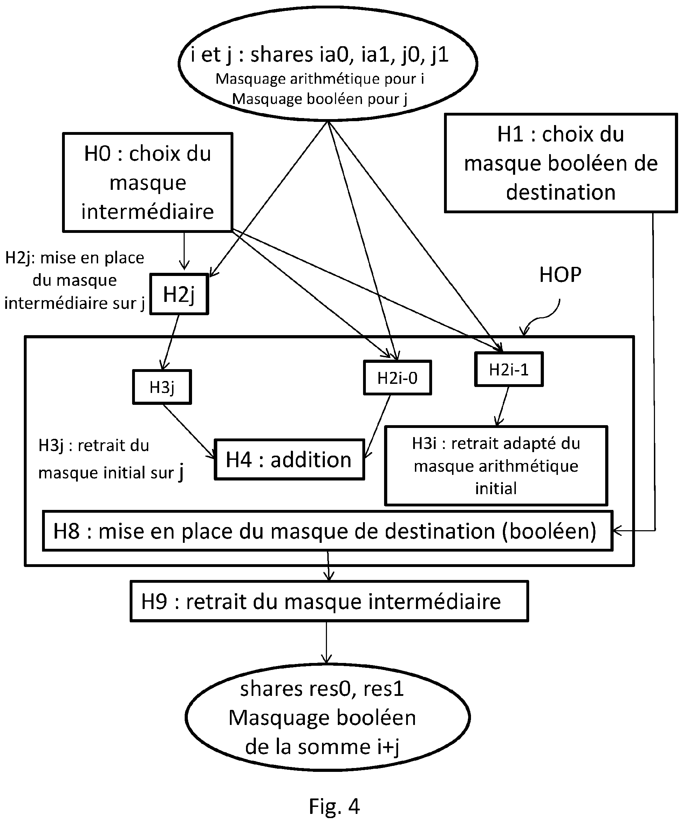

[Fig. 4] En figure 4, on a représenté un mode de réalisation par lequel une addition (une opération arithmétique particulière) est effectuée entre deux secrets, l'un masqué par masquage booléen et l'autre par masquage arithmétique.

i et j sont les deux secrets que l'on souhaite ajouter.

C'est i qui a fait l'objet d'un masquage arithmétique. ia0 et ia1 sont les shares codant i. On a donc la congruence i = ia0-ia1 [2ⁿ]

j a fait l'objet d'un masquage booléen d'ordre 1. j0 et j1 sont les shares codant j.

La procédure d'addition est la suivante :
Au cours d'une étape H0, on choisit parmi les deux chaînes de n bits 0 et 2ⁿ - 1. La chaîne ainsi choisie selon un choix à faible entropie est prévue pour servir de masque booléen intermédiaire, et est inscrite in extenso dans une variable à n bits rwide, les n bits valant alors tous 0 ou tous 1 : $rwide = rand \left\{0, 2n-1\right\}$

Il s'agit d'une étape similaire aux étapes E0, F0 et G0 des modes de réalisation précédents. Néanmoins on n'utilise pas de variable booléenne rbit, celle-ci étant inutile.

Au cours d'une étape H1, un masque de destination de type booléen et de n bits est choisi parmi 2ⁿ valeurs possibles (c'est un masque booléen à forte entropie). Il est inscrit dans la variable de n bits rbool. C'est une étape similaire aux étapes E1 et G1 des modes de réalisation des figures 1 et 3. $rbool = rand \left[0, 2n\right[$

Puis on applique le masque intermédiaire au secret j. Au cours d'une étape H2j, on applique le masque booléen à faible entropie à un share de j. Plus précisément on applique le masque booléen à faible entropie sur le share j0. Le résultat est inscrit dans la variable intermédiaire c. $c = j 0 ⊕ rwide$

Puis on effectue une opération HOP sur le secret j, comprenant le retrait du masquage initial, une addition avec le secret i et la mise en place du masque de destination. L'opération HOP est adaptée en tenant compte de rwide.

Ainsi, au cours d'une étape H2i-0, on applique le masque booléen intermédiaire à un premier share de i. Plus précisément, on applique le masque booléen à faible entropie au share ia0. Le résultat est inscrit dans la variable intermédiaire iaw0. $iaw 0 = ia 0 ⊕ rwide$

Parallèlement, le masque à faible entropie est appliqué au deuxième share de i ia1, au cours d'une étape H2i-1. Le résultat est stocké dans une variable intermédiaire iaw1. $iaw 1 = ia 1 ⊕ rwide$

Parallèlement, au cours d'une étape H3j, le secret j étant protégé par le masque intermédiaire, on supprime le masque booléen initial, à l'aide de le share j1 dont c'est la fonction. Le résultat est stocké dans une variable intermédiaire d. $d = c ⊕ j 1$

Le masque arithmétique de ia est maintenu à ce stade : ia0 et ia1 ne sont pas combinés.

Puis, au cours d'une étape H4, le masque intermédiaire ayant ainsi été appliqué aux deux termes à additionner (i et j), et le masque arithmétique ayant été conservé sur le terme qui le portait (à savoir i), on effectue l'opération arithmétique souhaitée, en l'occurrence une addition modulaire. L'opération ne s'effectuant qu'avec un des shares de i, à savoir ia0 (sous la forme iaw0), l'addition est qualifiée d'addition partielle de i et j. Le résultat est stocké dans une variable intermédiaire f. $f = d + iaw 0$

Au cours d'une étape H3i, on retire le masque arithmétique au résultat f de l'addition partielle de i et j à l'aide du contenu de la variable intermédiaire iaw1. Pour cela on effectue une soustraction modulaire, en retirant iaw1 à f, le résultat étant placé dans une variable h. $h = f - iaw 1$

La procédure peut alors être interrompue, le secret (le résultat de l'addition) restant protégé par le masquage à faible entropie et faisant l'objet de diverses opérations.

La procédure peut à l'inverse être poursuivie, ou reprise après diverses opérations, de la manière suivante.

Puis, au cours d'une étape H8 on applique le masque booléen de destination à ce résultat de l'addition, le résultat étant placé dans une variable k. $k = h ⊕ rbool$

L'opération HOP est alors terminée (elle a été adaptée en tenant compte de la valeur de rwide au stade de l'étape H2i-0 et de l'étape H2i-1).

Enfin, au cours d'une étape H9 on retire le masque intermédiaire pour obtenir le premier share du résultat dans le masquage de destination. $res 0 = k ⊕ rwide$

rbool aussi appelé res1 est la deuxième share du résultat dans le masquage de destination. $res 1 = rbool$

Le contenu des variables res0 et res1 constituent des shares qui encodent alors correctement la somme i+j, en masquage booléen. On a fait une opération arithmétique sans convertir le secret protégé par un masque booléen vers une protection par masquage arithmétique et on l'a fait avec un nombre d'opérations limité.

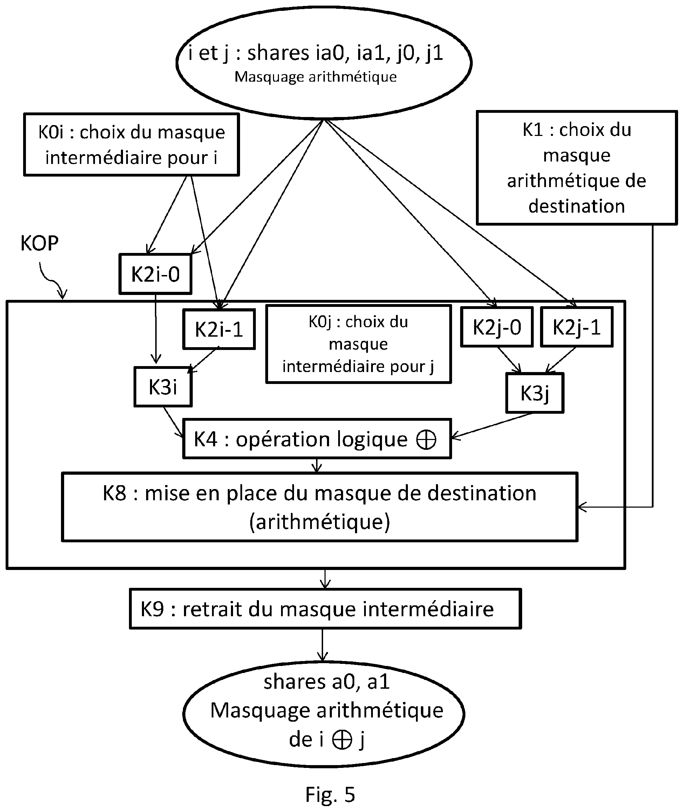

[Fig. 5] En figure 5, on a représenté un mode de réalisation par lequel un opérateur ou exclusif XOR (⊕) est effectué entre deux secrets masqués de manière arithmétique.

i et j sont les secrets que l'on souhaite traiter par un opérateur logique.

ia0 et ia1 et respectivement ja0 et ja1 sont leurs encodages respectifs en masquage arithmétique.

On a donc les congruences ia0 - ia1 = i [2ⁿ] et ja0-ja1 = j [2ⁿ].

La procédure proposée pour effectuer un opérateur XOR (ou exclusif) entre i et j est la suivante :

Au cours d'une étape K0i, similaire à l'étape E0 du mode de réalisation de la figure 1, et aussi à l'étape F0 du mode de réalisation de la figure 2, à l'étape G0 de la figure 3, et à l'étape H0 de la figure 4, on choisit parmi les deux chaînes de n bits 0 et 2ⁿ - 1. La chaîne ainsi choisie selon un choix à faible entropie est prévue pour servir de masque booléen intermédiaire, et est inscrite d'une part in extenso dans une variable à n bits rwide, les n bits valant alors tous 0 ou tous 1, $rwidei = rand \left\{0, {2}^{n}-1\right\}$
et également de manière condensée dans une variable à un seul bit rbit, qui vaut 0 dans le premier cas, et 1 dans le deuxième cas. $rbiti = rwidei & 1$

Parallèlement, au cours d'une étape K1, on génère le secret du masquage arithmétique de destination, parmi un grand nombre de masques possibles. Ce secret est une chaine de n bits, toutes les chaînes possibles - elles sont au nombre de 2ⁿ, étant avantageusement équiprobables dans la génération de ce secret, et le résultat du tirage aléatoire étant stocké dans une variable rarith. L'opération est similaire à l'opération F1 de la figure 2. $rarith = rand \left[0, 2n\right[$

Dans une étape K2i-0, on procède à la mise en place du masque intermédiaire sur le share ia0. Cela implique de mettre en œuvre l'opérateur XOR. Le résultat est stocké dans une variable di. $di = ia 0 ⊕ rwidei$

Puis on effectue une opération KOP sur le secret i, comprenant le retrait du masquage arithmétique, une opération logique avec le secret j et la mise en place du masque de destination. L'opération KOP est adaptée en tenant compte de rwide.

Dans une étape K0j, on génère un deuxième masque à faible entropie, différent du premier, et pour le secret j.

On choisit parmi les deux chaînes de n bits 0 et 2ⁿ - 1. La chaîne ainsi choisie est inscrite d'une part in extenso dans une variable à n bits rwide, les n bits valant alors tous 0 ou tous 1, $rwidej = rand \left\{0, {2}^{n}-1\right\}$
et également de manière condensée dans une variable à un seul bit rbit, qui vaut 0 dans le premier cas, et 1 dans le deuxième cas. $rbitj = rwidej & 1$

Les deux masques à faible entropie sont combinés dans des variables rwide pour la version à n bits, et rbit pour la version à 1 bit, en utilisant un opérateur ou exclusif (XOR) pour la première et un opérateur et (AND) pour la deuxième. $rwide = rwidei ⊕ rwidej$ $rbit = rwide & 1$

Dans des étapes K2i-1, K2j-0 et K2j-1, on procède à la mise en place des masques booléens intermédiaires (à faible entropie) sur le share ia1, et en parallèle, sur les shares ja0 et ja1. Les résultats sont stockés dans des variables ei, dj et ej. $ei = ia 1 ⊕ rwidei$ $dj = ja 0 ⊕ rwidej$ $ej = ja 1 ⊕ rwidej$

Puis, une fois ces valeurs masquées obtenues, dans une étape K3, on les utilise pour procéder au retrait des masques arithmétiques. Cela implique la réalisation de deux différences modulo 2ⁿ. Les opérations sont réalisées sur les variables di et ei, ainsi que dj et ej. Au vu de la présence du masque booléen intermédiaire sur ces deux shares, il est nécessaire de corriger le résultat de la soustraction par la déduction de son résultat de la valeur de rbit. Les résultats sont inscrits dans des variables intermédiaires fi et fj. $fi = di - ei - rbiti$ $fj = dj - ej - rbitj$

On procède alors à l'opération XOR - ou exclusif entre fi et fj. Le résultat est inscrit dans une variable g. $g = fi ⊕ fj$

Puis au cours d'une étape K8 on adapte le masque arithmétique généré à l'étape K1 au fait qu'on souhaite l'appliquer sur une chaîne ayant fait l'objet d'un masquage booléen particulier, et on stocke le masque arithmétique adapté dans une variable h. Pour cela, on applique l'opérateur XOR au secret rarith et au secret rwide, en ajoutant la valeur 0 ou 1 contenue dans rbit. $h = \left(rarith⊕rwide\right) + rbit$

Puis on applique le masque arithmétique ainsi adapté sur le résultat de l'opération logique stocké dans la variable intermédiaire g et le résultat est stocké dans une variable intermédiaire k. Il est obtenu par l'addition modulaire du contenu des variables g et h. $k = g + h$

Il est précisé ici que comme le secret rarith n'est pas utilisé avant la mise en œuvre de l'étape K8, il peut être généré dans différentes variantes à tout moment jusqu'à juste avant l'étape K8.

L'opération KOP est alors terminée (elle a été adaptée en tenant compte de la valeur de rwidei au stade de l'étape K2i-1, de l'étape K3 et de l'étape K8).

Seulement après la réalisation de l'étape K8, au cours d'une étape K9, on enlève le masque booléen intermédiaire au contenu de la variable k. On conserve le résultat dans la variable a0. Pour cela, on applique l'opérateur XOR au contenu de la variable k et au secret rwide. $a 0 = k ⊕ rwide$

Les shares a0 et rarith que l'on rebaptise a1 encodent alors le résultat de l'opération logique, en masquage arithmétique.

Bien qu'uniquement une procédure d'addition sur variables masquées par masquage booléen et une autre d'opération logique ou exclusif (XOR) sur variables masquées par masquage arithmétique aient été présentées, d'autres procédures analogues peuvent être développées pour effectuer d'autres opérations de manière rapide.

De telles procédures adaptées à une opération permettent une meilleure performance que la conversion des deux opérandes, puis la conversion du résultat.

### Mode de réalisation impliquant un masquage arithmétique modulo Q

Les procédures précédentes n'étaient valides que pour un masquage arithmétique modulo une puissance de 2. Mais ces procédures sont généralisées ci-après pour un masquage arithmétique modulo Q, avec Q un entier positif quelconque, au prix de quelques étapes supplémentaires. Soit m le nombre de bits de l'architecture du processeur exécutant la procédure, et soit q le nombre des bits nécessaires pour écrire l'entier Q en binaire.

### Passage d'un masque arithmétique modulo Q à un masquage booléen

Soient a0 et a1 deux shares encodant un secret s en masquage arithmétique de la façon suivante a0 + a1 = s [Q], avec a0<Q et a1<Q. La procédure proposée pour passer d'un masquage arithmétique à un masquage booléen est la suivante :
On choisit aléatoirement entre deux valeurs - deux chaînes de n bits 0 et 2ⁿ - 1, ce qui définit un premier masque à faible entropie. $rwide = rand \left\{0, {2}^{n}-1\right\}$
Puis on écrit cette valeur de manière condensée, comme précédemment avec un opérateur ET booléen. $rbit = rwide & 1$
On génère aussi un masque booléen b0, parmi 2ⁿ valeurs possibles. $b 0 = rand \left[0, 2n\right[$
On ajoute le masque à faible entropie sur un des shares (étape 1), puis sur l'autre (étape 2) $d = a 0 ⊕ rwide$ $e = a 1 ⊕ rwide$
Les shares arithmétiques obtenus sont d et e.
Puis on additionne les shares arithmétiques d et e en tenant compte du masque à faible entropie (étape 3). Le résultat de cette opération est appelé f, et est un secret recomposé mais masqué. $f = d + e + rbit$
Si on fait abstraction du masquage faible entropie, le résultat f est dans [0,2Q[.
On fait donc une soustraction éventuelle de Q pour être dans [0,Q[ (étape 4), à l'aide d'une fonction soustraitQsibesoin, qui est présentée plus loin dans le présent texte, appliquée à f et dont le résultat est appelé i. Cette fonction tient compte du premier masque à faible entropie, et en fournit un deuxième, qui est appellé rwide'. rwide' est le masque à faible entropie associé à i, potentiellement différent de rwide. En effet, soustraitQsibesoin peut impliquer des calculs modifiant rwide, ce qui nécessite de choisir un nouveau masque à faible entropie pour rester dans l'ensemble {0, 2ⁿ - 1}. $\left\{i, rwide′\right\} = soustraitQsibesoin \left(f, rbit, rwide\right)$
Puis on ajoute le masque booléen b0 à i (étape 5), et on enlève le deuxième masque à faible entropie au résultat (étape 6). On appelle le résultat de ces étapes b1. $g = i ⊕ b 0$ $b 1 = g ⊕ rwide ′$
Les shares {b0, b1} encodent alors correctement le secret, en masquage booléen.

La procédure repose sur un passage du masquage arithmétique au masquage faible entropie (étapes 1-4), puis du masquage faible entropie au masquage booléen (5-6).

Comparée à la procédure modulo 2ⁿ, cette procédure implique une étape supplémentaire, l'étape 4. Celle-ci est due au fait que le passage d'un masquage arithmétique au masquage faible entropie demande une opération d'addition modulo Q, plus complexe à effectuer que celle modulo 2ⁿ. Ainsi, l'étape 4 vise à calculer à partir de f une nouvelle valeur i, potentiellement masquée avec un masque faible entropie différent de rwide, telle que i⊕rwide soit dans l'intervalle [0,Q[, a contrario de f⊕rwide qui est dans [0,2Q[.

Cette étape peut être faite de plusieurs manières différentes, par exemple en suivant la procédure suivante :
On choisit un nouveau masque à faible entropie. $rwide ′ = rand \left\{0, {2}^{n}-1\right\}$ $rbit ′ = rwide ′ & 1$
Parallèlement, on masque, ou on a masqué Q par le premier masque à faible entropie rwide, dans une variable w. $w = \left(rwide⊕Q\right) + rbit$
Puis on entame une procédure en 6 étapes.
(étape 4.1) On soustrait Q masqué comme précédemment à f. $f ← f - w$
(étape 4.2) On utilise la fonction arithmetic shift right asr: on copie le bit de signe de f sur tous les bits, soit sur les m-1 bits qui ne sont pas le bit de signe (m est le nombre de bits de l'architecture), pour obtenir un élément bitmask dérivant du secret recomposé masqué f. $bitmask = asr \left(f, m-1\right)$
Bitmask contient le bit de signe de (f-w) sur tous ses bits. Autrement dit, n'importe quel bit de bitmask vaut 1 si et seulement si (f-w < 0)
On ajoute par ailleurs le nouveau masque à faible entropie à f. $f ← f ⊕ rwide ′$
On retire alors au résultat l'ancien masque à faible entropie. $f ← f ⊕ rwide$
f est maintenant masqué par rwide', à savoir le 2^{e} masque à faible entropie.
(étape 4.3) On effectue une étape logique fondée sur la trace du secret et le 2^{e} masque. $g = \left(bitmask&Q\right) ⊕ rwide ′$
(étape 4.4) On prend en compte le premier secret rwide dans la vérification du signe de f-g $h = \left(rwide&Q\right)$
(étape 4.5) On effectue une étape logique fondée sur la trace du secret $g ← g ⊕ h$
A ce stade, g vaut Q ⊕ rwide' si f - Q < 0 et rwide' sinon.
(étape 4.6) On ajoute g à f - Q masqué par rwide' , ce qui ramène la variable dans l'intervalle voulu. On appelle le résultat i. $i = f + g + rbit ′$
Le calcul est terminé et la fonction renvoie le 2^{e} masque à faible entropie et le secret sous la forme obtenue i.
return {i, rwide'}

Cette procédure exploite le signe de la soustraction de f et Q⊕rwide (étape 4.1) pour former une variable répétant le bit de signe sur tous ses bits (étape 4.2). Cette variable, lorsqu'utilisée dans un ET booléen en étape 4.3 laisse passer Q si et seulement si (f - (Q⊕rwide) est négatif. Comme (f - (Q⊕rwide) implique des variables masquées par rwide, le résultat ne peut pas être exploité directement pour déterminer s'il faut soustraire Q ou non. Les étapes 4.4 et 4.5 permettent de s'adapter à la valeur du masque faible entropie, pour obtenir le résultat g, qui ajouté à f et rbit' en étape 4.6, donne une valeur qui, si elle était démasquée, se situerait dans l'intervalle [0,Q[.

### Passage d'un masquage booléen à un masquage arithmétique modulo Q

Une procédure est également proposée pour passer d'un masquage booléen à un masquage arithmétique modulo Q. Soient b0 et b1 deux shares encodant un secret s en masquage booléen : b0 ⊕ b1 = s. La procédure proposée pour passer d'un masquage booléen à un masquage arithmétique est la suivante :
On choisit à nouveau un masque à faible entropie parmi deux valeurs. $rwide = rand \left\{0, {2}^{n}-1\right\} puis rbit = rwide & 1$
On choisit le masque arithmétique parmi 2^{a} valeurs possibles, avec a un entier supérieur ou égal à q. $rarith = rand \left[0, {2}^{a}\right[$
(étape 1) On ajoute le masque faible entropie à le share b0. $c = b 0 ⊕ rwide$
(étape 2) On enlève le masque booléen au résultat de l'étape précédente $d = c ⊕ b 1$
(étape 3) Puis on effectue une correction du signe $e = \left(rarith⊕rwide\right) + rbit$
(étape 4) Puis on ajoute le masque arithmétique $f = d + e$
(étape 5) Puis on enlève le masque à faible entropie $g = f ⊕ rwide$
(étape 6) Puis on effectue une réduction modulaire du résultat, ce qui donne le share a1, comme reste de la division entière de g par Q. $a 1 = g mod Q$

(étape 7) Et on effectue une autre réduction modulaire, pour obtenir le share a0. Pour cela on utilise un intermédiaire h. h est construit à partir de Q et rarith et de l'opérateur de décalage binaire à gauche (<<) qui décale la séquence de bits de Q de m-q bits vers la gauche (des bits à zéro sont introduits à droite). Cette méthode permet de trouver un nombre positif égal à -rarith modulo Q. $h = \left(Q≪\left(m-q\right)\right) - rarith$ $a 0 = h mod Q$ a0 est ainsi défini comme reste de la division entière de h par Q.
Les shares {a0, a1} encodent alors correctement le secret, en masquage arithmétique : s = a0+a1 mod Q.

La procédure est d'un certain point de vue similaire à la conversion modulo 2ⁿ. Cependant, on choisit le masque rarith dans un intervalle plus grand que celui des nombres manipulés (dans l'idéal beaucoup plus grand, par exemple 2 ou 10 fois plus grand, ou 100 fois plus grand) afin de garantir un bon niveau de sécurité. En effet, la réduction modulaire (étapes 6 et 7) répartit les 2^{a} masques arithmétiques possibles entre Q valeurs possibles, ces valeurs devant être les plus équiprobables possible. Plus 2^{a} est grand, plus la distribution des valeurs après réduction modulaire se rapproche de l'équiprobabilité.

### Application de l'invention à un masquage d'ordre supérieur à 2

L'invention peut également être utilisée avantageusement pour effectuer une conversion, dans un sens ou dans l'autre, entre masquages booléen et arithmétique à un ordre dit « supérieur », i.e. lorsque le secret s'exprime comme : $s = a 0 + a 1 + … + ak mod {2}^{n}$ en masquage arithmétique
ou : $s = b 0 ⊕ b 1 ⊕ … ⊕ bk$ en masquage booléen.

Ainsi, k+1 shares sont manipulés, avec k+1 entier au moins égale à 3.

Les fonctions de conversion de l'état de l'art ont une complexité en temps d'exécution qui croit avec k, généralement de manière quadratique.

Il est proposé d'utiliser l'invention pour une procédure de conversion de l'état de l'art d'ordre k au lieu de k+1, ce qui est donc avantageux, du fait de la croissance quadratique vis-à-vis de k.

Comparées à l'état de l'art, les procédures suivantes permettent d'avoir un compromis sécurité-performance se situant entre l'utilisation d'un masquage à k shares, et l'utilisation d'un masquage à k+1 shares. Elles permettent une performance accrue.

### Passage du masquage arithmétique au masquage booléen

Soient a0, ..., ak k+1 shares encodant un secret s en masquage arithmétique : s = a0+a1+...+ak mod 2ⁿ. La procédure proposée pour passer d'un masquage arithmétique à un masquage booléen est la suivante, le choix de a0 et a1 parmi les k+1 shares étant arbitraire.
Comme précédemment, on choisit un masque à faible entropie entre deux valeurs rwide = rand{0, 2n - 1} et rbit = rwide & 1.
On choisit de plus un masque arithmétique $b 0 = rand \left[0, {2}^{n}\right[$ On s'engage ensuite dans une succession de 5 étapes.
(étape 1) On ajoute le masque faible entropie à chaque share, de manière adaptée. $for i in \left\{0,…,k\right\} ai ← ai \times \left(-2\times rbit+1\right)$ $- 2 xrbit + 1 vaut - 1 si rbit = 1 et 1 si rbit = 0$ $a 0 ← a 0 + rbit$ On a maintenant : s⊕ rwide = a0+a1+a2...+ak
(étape 2) On enlève un masque arithmétique à a1 $a 1 ← a 1 + a 0$ (étape 3) On convertit k shares arithmétiques vers un masquage booléen avec une procédure adaptée à cet usage.
b1,...,bk = ConvertArithToBoolean(a1,...,ak)
(étape 4) On ajoute un masque booléen à b1 $b 1 ← b 1 ⊕ b 0$ (étape 5) On enlève le masque faible entropie de b0 $b 0 ← b 0 ⊕ rwide$ Les shares {b0,...,bk} encodent alors correctement le secret, en masquage booléen.

La procédure repose sur un passage du masquage arithmétique à k+1 shares à un mix entre masquage arithmétique à k shares et masquage faible entropie (étapes 1-2). La procédure utilise ensuite une fonction de conversion pour convertir les k shares arithmétiques en k shares booléens (étape 3). Enfin, la procédure ajoute un masque booléen pour obtenir k+1 shares booléens (étape 4) puis enlève le masquage à faible entropie (étape 5).

### Passage du masquage booléen au masquage

Une procédure similaire peut-être proposée pour passer d'un masquage booléen à un masquage arithmétique. Soient b0, ..., bk (k+1) shares encodant un secret s en masquage booléen : s = b0 ⊕ b1⊕...⊕ bk. La procédure proposée pour passer d'un masquage booléen à un masquage arithmétique est la suivante (le choix de b0 et b1 parmi les k+1 shares est arbitraire) :
On choisit un masque à faible entropie entre deux valeurs comme précédemment. $rwide = rand \left\{0, 2n-1\right\} rbit = rwide & 1$
On choisit un masque arithmétique. $z 0 = rand \left[0, {2}^{n}\right[$
Puis on s'engage dans une succession de 5 étapes.
(étape 1) On ajoute le masque faible entropie au share b0 : c = b0 ⊕ rwide
(étape 2) On enlève un premier masque booléen au résultat : d = c ⊕ b1
Le secret est donc masqué par k+1 shares booléens : d, b2, ... bk, rwide, ce qui se traduit par l'égalité à ce stade : s = d⊕ b2⊕...⊕ bk ⊕ rwide, d'où l'on déduit : s⊕ rwide = d⊕ b2⊕...⊕ bk
(étape 3) On utilise alors une fonction de conversion de masquage ConvertBoolToArith adaptée à un masquage d'ordre k, seulement, ce qui est avantageux, puisque les shares sont en fait au nombre de k+1. $z 1 , … , zk = ConvertBoolToArith \left(d, b2, …, bk\right)$
On obtient z1,...zk qui encodent s⊕rwide en masquage arithmétique avec la règle suivante :
   si rbit=0 alors s = z1+...+zk
   et $si rbit = 1 alors - s - 1 = z 1 + … + zk$
   (étape 4) On ajoute un masque arithmétique à z1 $z 1 ← z 1 - z 0$
   On obtient z0,...zk qui encodent s⊕rwide en masquage arithmétique avec la règle suivante : $Si rbit = 0 alors s = z 0 + z 1 + … + zk$ $Si rbit = 1 alors - s - 1 = z 0 + z 1 + … + zk$
   (étape 5) On effectue la correction de la constante et on enlève le masque faible entropie. $z 0 = z 0 + rbit$ $for i in \left\{0,…,k\right\} : zi = zi x \left(-2xrbit+1\right)$ $- 2 xrbit + 1 vaut - 1 si rbit = 1 et 1 si rbit = 0$
   Les shares {z0,...,zk} encodent alors correctement le secret, en masquage arithmétique.

La procédure repose sur un passage du masquage booléen à k+1 shares à un mélange entre masquage booléen à k shares et masquage faible entropie (étapes 1-2). La procédure utilise ensuite une fonction de conversion pour convertir les k shares booléens en k shares arithmétiques (étape 3). Enfin, la procédure ajoute un masque arithmétique pour obtenir k+1 shares arithmétiques (étape 4) puis enlève le masquage à faible entropie (étape 5).

Des procédures pour effectuer la conversion ConvertBoolToArith et ConvertArithToBool existent dans l'état de l'art, par exemple dans le document suivant : Coron, JS., Großschädl, J., Vadnala, P.K. (2014). Secure Conversion between Boolean and Arithmetic Masking of Any Order. In: Batina, L., Robshaw, M. (eds) Cryptographic Hardware and Embedded Systems - CHES 2014. CHES 2014. Lecture Notes in Computer Science, vol 8731. Springer, Berlin, Heidelberg.

L'algorithme 4 de cet article permet d'implémenter ConvertArithToBool, et l'algorithme 6 permet d'implémenter ConvertBoolToArith.

Les publications suivantes présentent des alternatives pour ConvertBoolToArith : Coron, JS. (2017). High-Order Conversion from Boolean to Arithmetic Masking. In: Fischer, W., Homma, N. (eds) Cryptographic Hardware and Embedded Systems - CHES 2017. CHES 2017. Lecture Notes in Computer Science(), vol 10529. Springer, Cham. Hutter, M., Tunstall, M.: Constant-time higher-order boolean-toarithmetic masking. Cryptology ePrint Archive, Report 2016/1023 (2016).

La publication suivante présente une alternative pour le ConvertArithToBool : Coron, JS., Großschädl, J., Tibouchi, M., Vadnala, P.K. (2015). Conversion from Arithmetic to Boolean Masking with Logarithmic Complexity. In: Leander, G. (eds) Fast Software Encryption. FSE 2015. Lecture Notes in Computer Science(), vol 9054. Springer, Berlin, Heidelberg.

### Considérations finales

L'invention peut être avantageusement combinée à d'autres contre-mesures, comme le préchargement aléatoire, qui consiste à écrire une donnée aléatoire dans chaque ressource physique utilisée par l'implémentation (e.g. registres, mémoire) avant chaque écriture d'une donnée sensible dans cette même ressource.

On pourrait définir le masquage arithmétique en choisissant deux shares a0 et a1 tels que a0 + a1 = s [2ⁿ] au lieu de a0 - a1 = s [2ⁿ].

Les procédures s'adaptent en choisissant a'0 = a0 et a'1 = -a1, et on a alors a'0 - a'1 = a0 -(-a1) = a0+a1 = s [2ⁿ]. On peut alors poursuivre la procédure choisie en utilisant a'0 et a'1.

L'invention peut être utilisée pour masquer les fonctions de chiffrement basées sur le principe ARX (addition, rotation, ou exclusif), ou pour masquer certains algorithmes de cryptographie post-quantique (e.g. Kyber), qui nécessitent des conversions entre masquages booléen et arithmétique.

## Revendications

1. Méthode de traitement par un processeur d'un secret protégé, comprenant une étape de choix (E0 ; F0 ; G0 ; H0 ; K0i) et de mise en place (E2 ; F2 ; G2i ; H2j ; K2i), sur le secret protégé par un masque initial, d'un masquage à faible entropie, puis la mise en œuvre sur le secret maintenu sous la protection dudit masquage à faible entropie d'une opération (EOP ; FOP ; GOP ; HOP ; KOP) incluant un retrait (E3-2 ; F3 ; G3i ; H3j ; K3i) du masque initial, la méthode de traitement étant **caractérisée en ce que,** un encodage étant sur n bits, le masquage à faible entropie comprend le choix et l'application d'un masque choisi dans l'ensemble {0 ; 2ⁿ - 1} et appliqué par un opérateur ou exclusif bit à bit.

2. Méthode de traitement d'un secret protégé selon la revendication 1, **caractérisée en ce que** l'opération (GOP ; HOP) comprend une opération arithmétique combinant le secret et une autre donnée.

3. Méthode de traitement d'un secret protégé selon la revendication 1 ou la revendication 2, **caractérisée en ce que** l'opération (KOP) comprend une opération logique combinant le secret et une autre donnée.

4. Méthode de traitement d'un secret protégé selon l'une des revendications 1 à 3, **caractérisée en ce que** l'opération (EOP ; FOP ; HOP) comprend l'application d'un masque de destination distinct du masque initialement porté par le secret.

5. Méthode de traitement d'un secret protégé selon la revendication 4, **caractérisée en ce que** l'opération (FOP) comprend la mise en place sur le secret d'un masque arithmétique alors que le masque porté initialement était un masque booléen.

6. Méthode de traitement d'un secret protégé selon la revendication 4, **caractérisée en ce que** l'opération (EOP) comprend la mise en place sur le secret d'un masque booléen alors que le masque porté initialement était un masque arithmétique.

7. Méthode de traitement d'un secret protégé selon la revendication 5 ou la revendication 6, **caractérisée en ce que** le masque arithmétique est un masque arithmétique modulo une puissance de 2.

8. Méthode de traitement d'un secret protégé selon la revendication 5, **caractérisée en ce que** le masque arithmétique est un masque arithmétique modulo un entier qui n'est pas une puissance de 2, et la méthode de traitement comprend le choix aléatoire d'un entier entre 0 et une borne maximale au moins égale à la puissance de 2 codée sur autant de bits que ledit entier qui n'est pas une puissance de 2, puis une réduction modulaire adaptée.

9. Méthode de traitement d'un secret protégé selon la revendication 6, **caractérisée en ce que** le masque arithmétique est un masque arithmétique modulo un entier qui n'est pas une puissance de 2, et la méthode de traitement comprend au moins une opération d'arithmétique modulaire modulo ledit entier qui n'est pas une puissance de 2, effectuée sous la protection d'un deuxième masque choisi dans l'ensemble {0 ; 2ⁿ - 1} et appliqué par un opérateur ou exclusif bit à bit.

10. Méthode de traitement d'un secret protégé selon l'une des revendications 1 à 9, **caractérisée en ce que** l'opération (GOP ; HOP) applique le même masque à faible entropie à une deuxième donnée secrète à laquelle le secret est ensuite combiné au cours de l'opération (GOP ; HOP).

11. Méthode de traitement d'un secret protégé selon l'une des revendications 1 à 10, **caractérisée en ce que** l'opération (EOP ; FOP ; GOP ; KOP) comprend une opération arithmétique corrective dépendant du masque à faible entropie choisi et menée lors du retrait du masque initial ou lors de l'application d'un masque arithmétique ou lors d'une opération arithmétique combinant le secret à une deuxième donnée secrète.

12. Méthode de traitement d'un secret protégé selon l'une des revendications 1 à 11, **caractérisée en ce que** l'opération comprend la mise en place (E8 ; F8 ; G8 ; H8 ; K8) d'un masque de destination et la méthode de traitement comprenant aussi une étape (E1 ; F1 ; G1 ; H1, K1) de choix aléatoire du masque de destination parmi un ensemble de masques possibles relevant d'une entropie plus forte que celle dudit masquage à faible entropie, l'opération (EOP ; FOP ; GOP ; HOP ; KOP) étant suivie d'un retrait (E9 ; F9 ; G9 ; H9 ; K9) du masque à faible entropie.

13. Méthode de traitement d'un secret protégé selon l'une des revendications 1 à 12, **caractérisée en ce que** le secret protégé est protégé initialement par un masquage d'ordre 1.

14. Méthode de traitement d'un secret protégé selon l'une des revendications 1 à 13, **caractérisée en ce que** le secret protégé est protégé par un masquage initial d'ordre au moins 2, la méthode de traitement faisant appel à une procédure pour passer d'un masquage booléen à un masquage arithmétique ou pour passer d'un masquage arithmétique à un masquage booléen pour un masquage d'ordre inférieur d'une unité à l'ordre du masquage initial.

## Patentansprüche

1. Verfahren zur Bearbeitung eines geschützten Geheimnisses durch einen Prozessor, umfassend einen Schritt zum Wählen (E0; F0; G0; H0; K0i) und Aufbauen (E2; F2; G2i; H2j; K2i) auf dem durch eine Anfangsmaske geschützten Geheimnis, einer Maskierung mit schwacher Entropie, gefolgt vom Durchführen am Geheimnis, das unter dem Schutz der Maskierung mit schwacher Entropie gehalten wird, einer Operation (EOP; FOP; GOP; HOP; KOP), die eine Abnahme (E3-2; F3; G3i; H3j; K3i) der Anfangsmaske beinhaltet, wobei das Bearbeitungsverfahren **dadurch gekennzeichnet ist, dass** die Maskierung mit schwacher Entropie bei einer Kodierung mit n Bits die Wahl und die Anwendung einer Maske umfasst, die aus der Einheit {0; 2*ⁿ* - 1} ausgewählt, und durch einen Operator oder exklusiv Bit für Bit angewendet wird.

2. Verfahren zur Bearbeitung eines geschützten Geheimnisses nach Anspruch 1, **dadurch gekennzeichnet, dass** die Operation (GOP; HOP) eine arithmetische Operation umfasst, die das Geheimnis und ein anderes Datenelement kombiniert.

3. Verfahren zur Bearbeitung eines geschützten Geheimnisses nach Anspruch 1 oder Anspruch 2, **dadurch gekennzeichnet, dass** die Operation (KOP) eine logische Operation umfasst, die das Geheimnis und ein anderes Datenelement kombiniert.

4. Verfahren zur Bearbeitung eines geschützten Geheimnisses nach einem der Ansprüche 1 bis 3, **dadurch gekennzeichnet, dass** die Operation (EOP; FOP; HOP) die Anwendung einer Destinationsmaske umfasst, die sich von der anfänglich von dem Geheimnis getragenen Maske unterscheidet.

5. Verfahren zur Bearbeitung eines geschützten Geheimnisses nach Anspruch 4, **dadurch gekennzeichnet, dass** die Operation (FOP) das Aufbauen einer arithmetischen Maske auf dem Geheimnis umfasst, während die anfänglich getragene Maske eine boolesche Maske war.

6. Verfahren zur Bearbeitung eines geschützten Geheimnisses nach Anspruch 4, **dadurch gekennzeichnet, dass** die Operation (EOP) das Aufbauen einer booleschen Maske auf dem Geheimnis umfasst, während die anfänglich getragene Maske eine arithmetische Maske war.

7. Verfahren zur Bearbeitung eines geschützten Geheimnisses nach Anspruch 5 oder Anspruch 6, **dadurch gekennzeichnet, dass** die arithmetische Maske eine arithmetische Maske modulo einer Potenz von 2 ist.

8. Verfahren zur Bearbeitung eines geschützten Geheimnisses nach Anspruch 5, **dadurch gekennzeichnet, dass** die arithmetische Maske eine arithmetische Maske modulo einer ganze Zahl ist, die keine Potenz von 2 ist, und das Bearbeitungsverfahren die zufällige Wahl einer ganzen Zahl zwischen 0 und einer maximalen Grenze von mindestens gleich der Potenz von 2, die mit ebenso vielen Bits codiert wird, wie die ganze Zahl, die keine Potenz von 2 ist, gefolgt von einer angepassten modularen Reduzierung.

9. Verfahren zur Bearbeitung eines geschützten Geheimnisses nach Anspruch 6, **dadurch gekennzeichnet, dass** die arithmetische Maske eine arithmetische Maske modulo einer ganze Zahl ist, die keine Potenz von 2 ist, und das Bearbeitungsverfahren mindestens eine modulare arithmetische Operation modulo die ganze Zahl ist, die keine Potenz von 2 ist, die unter dem Schutz einer zweiten Maske durchgeführt wird, die aus der Einheit {0; 2*ⁿ* - 1} ausgewählt, und durch einen Operator oder exklusiv Bit für Bit angewendet wird.

10. Verfahren zur Bearbeitung eines geschützten Geheimnisses nach einem der Ansprüche 1 bis 9, **dadurch gekennzeichnet, dass** die Operation (GOP; HOP) die gleiche Maske mit schwacher Entropie auf ein zweites geheimes Datenelement anwendet, auf dem das Geheimnis danach im Laufe der Operation (GOP; HOP) kombiniert wird.

11. Verfahren zur Bearbeitung eines geschützten Geheimnisses nach einem der Ansprüche 1 bis 10, **dadurch gekennzeichnet, dass** die Operation (EOP; FOP; GOP; KOP) eine arithmetische Korrekturoperation abhängig von der ausgewählten Maske mit schwacher Entropie umfasst, und bei der Abnahme der Anfangsmaske oder bei der Anwendung einer arithmetischen Maske oder bei einer arithmetischen Operation durchgeführt wird, die das Geheimnis mit einem zweiten geheimen Datenelement kombiniert.

12. Verfahren zur Bearbeitung eines geschützten Geheimnisses nach einem der Ansprüche 1 bis 11, **dadurch gekennzeichnet, dass** die Operation das Aufbauen (E8; F8; G8; H8; K8) einer Destinationsmaske umfasst und das Bearbeitungsverfahren auch einen Schritt (E1; F1; G1; H1, K1) zum zufälligen Wählen der Destinationsmaske aus einer Menge an möglichen Masken umfasst, die aus einer stärkeren Entropie hervorgehen, als jene der Maskierung mit schwacher Entropie, wobei auf die Operation (EOP; FOP; GOP; HOP; KOP) eine Abnahme (E9; F9; G9; H9; K9) der Maske mit schwacher Entropie folgt.

13. Verfahren zur Bearbeitung eines geschützten Geheimnisses nach einem der Ansprüche 1 bis 12, **dadurch gekennzeichnet, dass** das geschützte Geheimnis anfänglich durch eine Maskierung 1. Ordnung geschützt wird.

14. Verfahren zur Bearbeitung eines geschützten Geheimnisses nach einem der Ansprüche 1 bis 13, **dadurch gekennzeichnet, dass** das geschützte Geheimnis durch eine anfängliche Maskierung mindestens 2. Ordnung geschützt wird, wobei das Bearbeitungsverfahren eine Prozedur einsetzt, um von einer booleschen Maskierung auf eine arithmetische Maskierung überzugehen, oder um von einer arithmetischen Maskierung auf eine boolesche Maskierung für eine Maskierung niedrigerer Ordnung einer Einheit auf die Ordnung der anfänglichen Maskierung überzugehen.

## Claims

1. A method for processing, by a processor, a protected secret, comprising a step of selecting (E0; F0; G0; H0; K0i) low-entropy masking and applying (E2; F2; G2i; H2j; K2i) said low-entropy masking to the secret protected by an initial mask, and then performing, on the secret maintained under the protection of said low-entropy masking, an operation (EOP; FOP; GOP; HOP; KOP) including removal (E3-2; F3; G3i; H3j; K3i) of the initial mask, the processing method being **characterised in that**, an encoding being over n bits, the low-entropy masking comprises selecting and applying a mask selected from the set {0; 2*ⁿ* - 1} and applied using a bitwise exclusive OR operator.

2. The method for processing a protected secret according to claim 1, **characterised in that** the operation (GOP; HOP) comprises an arithmetic operation combining the secret and another item of data.

3. The method for processing a protected secret according to claim 1 or claim 2, **characterised in that** the operation (KOP) comprises a logical operation combining the secret and another item of data.

4. The method for processing a protected secret according to any one of claims 1 to 3, **characterised in that** the operation (EOP; FOP; HOP) comprises applying a destination mask distinct from the mask initially worn by the secret.

5. The method for processing a protected secret according to claim 4, **characterised in that** the operation (FOP) comprises applying an arithmetic mask to the secret, whereas the mask initially worn was a Boolean mask.

6. The method for processing a protected secret according to claim 4, **characterised in that** the operation (EOP) comprises applying a Boolean mask to the secret, whereas the mask initially worn was an arithmetic mask.

7. The method for processing a protected secret according to claim 5 or claim 6, **characterised in that** the arithmetic mask is an arithmetic mask modulo a power of 2.

8. The method for processing a protected secret according to claim 5, **characterised in that** the arithmetic mask is an arithmetic mask modulo an integer that is not a power of 2, and the processing method comprises randomly selecting an integer between 0 and a maximum bound at least equal to the power of 2 encoded using the same number of bits as said integer that is not a power of 2, followed by a suitable modular reduction.

9. The method for processing a protected secret according to claim 6, **characterised in that** the arithmetic mask is an arithmetic mask modulo an integer that is not a power of 2, and the processing method comprises at least one modular arithmetic operation modulo said integer that is not a power of 2, performed under the protection of a second mask selected from the set {0; 2*ⁿ* - 1} and applied using a bitwise exclusive OR operator.

10. The method for processing a protected secret according to any one of claims 1 to 9, **characterised in that** the operation (GOP; HOP) applies the same low-entropy mask to a second item of secret data with which the secret is then combined during the operation (GOP; HOP).

11. The method for processing a protected secret according to any one of claims 1 to 10, **characterised in that** the operation (EOP; FOP; GOP; KOP) comprises a corrective arithmetic operation dependent on the selected low-entropy mask and performed when removing the initial mask, when applying an arithmetic mask or during an arithmetic operation which combines the secret with a second item of secret data.

12. The method for processing a protected secret according to any one of claims 1 to 11, **characterised in that** the operation comprises applying (E8; F8; G8; H8; K8) a destination mask, and the processing method also comprises a step (E1; F1; G1; H1, K1) of randomly selecting the destination mask from a set of possible masks having a higher entropy than that of said low-entropy masking, the operation (EOP; FOP; GOP; HOP; KOP) being followed by removal (E9; F9; G9; H9; K9) of the low-entropy mask.

13. The method for processing a protected secret according to any one of claims 1 to 12, **characterised in that** the protected secret is initially protected by masking of order 1.

14. The method for processing a protected secret according to any one of claims 1 to 13, **characterised in that** the protected secret is protected by initial masking of order at least 2, the processing method using a procedure for converting from Boolean masking to arithmetic masking or for converting from arithmetic masking to Boolean masking for masking of an order one less than the order of the initial masking.
